(19) Europäisches Patentamt
European Patent Office
Office européen des brevets

(11) EP 4 759 851 A1

(12) EUROPEAN PATENT APPLICATION

(43) Date of publication:
**17.06.2026 Bulletin 2026/25**

(21) Application number: **24218963.7**

(22) Date of filing: **11.12.2024**

(51) International Patent Classification (IPC):
***C08G 18/20*** *(2006.01)* ***C08G 18/32*** *(2006.01)*
***C08G 18/73*** *(2006.01)* ***C08G 18/79*** *(2006.01)*
***C08G 18/02*** *(2006.01)* ***C08G 18/77*** *(2006.01)*

(52) Cooperative Patent Classification (CPC):
**C08G 18/73; C08G 18/022; C08G 18/2081; C08G 18/3206; C08G 18/771; C08G 18/792**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Covestro Deutschland AG**
**51373 Leverkusen (DE)**

(72) Inventors:
- **Darmandeh, Heidar**
  **40597 Düsseldorf (DE)**
- **Richter, Frank**
  **51373 Leverkusen (DE)**
- **Latorre Martinez, Irene Cristina**
  **40764 Langenfeld (DE)**
- **Pires, Raul**
  **50670 Köln (DE)**

(74) Representative: **Levpat**
**c/o Covestro AG**
**Gebäude K12**
**51365 Leverkusen (DE)**

(54) **PROCESS FOR PREPARING A POLYISOCYANATE COMPOSITION COMPRISING AT LEAST ONE ISOCYANURATE STRUCTURE**

(57) The invention relates to a process for preparing a polyisocyanate composition comprising at least one isocyanurate structure, comprising reacting an isocyanate composition, comprising A) (3R,3aR,6S,6aR)-3,6-diisocyanato-2,3,3a,5,6,6a-hexahydrofuro[3,2-b]furan and/or (3S,3aR,6S,6aR)-3,6-diisocyanato-2,3,3a,5,6,6a-hexahydrofuro[3,2-b]furan and/or (3R,3aR,6R,6aR)-3,6-diisocyanato-2,3,3a,5,6,6a-hexahydrofuro[3,2-b]furan and B) at least one diisocyanate of the general formula OCN-R-NCO, wherein R is a divalent linear or branched aliphatic residue containing at least 4 carbon atoms, optionally in the presence of at least one catalyst C), to form a raw polyisocyanate composition, and subjecting the raw polyisocyanate composition to a distillation, preferably to a thin film distillation, a short path distillation and/or a falling film distillation, in order to at least partially remove unreacted moieties of components A) and B) and to obtain the polyisocyanate composition comprising at least one isocyanurate structure. The invention also relates to the polyisocyanate composition obtainable by the inventive process.

EP 4 759 851 A1

## Description

The invention relates to a process for preparing a polyisocyanate composition comprising at least one isocyanurate structure, comprising reacting an isocyanate composition, comprising A) (3R,3aR,6S,6aR)-3,6-diisocyanato-2,3,3a,5,6,6a-hexahydrofuro[3,2-b]furan and/or (3S,3aR,6S,6aR)-3,6-diisocyanato-2,3,3a,5,6,6a-hexahydrofuro [3,2-b]furan and/or (3R,3aR,6R,6aR)-3,6-diisocyanato-2,3,3a,5,6,6a-hexahydrofuro[3,2-b]furan and B) at least one diisocyanate of the general formula OCN-R-NCO, wherein R is a divalent linear or branched aliphatic residue containing at least 4 carbon atoms, optionally in the presence of at least one catalyst C), to form a raw polyisocyanate composition, and subjecting the raw polyisocyanate composition to a distillation, preferably to a thin film distillation, a short path distillation and/or a falling film distillation, in order to at least partially remove unreacted moieties of components A) and B) and to obtain the polyisocyanate composition comprising at least one isocyanurate structure. The invention also relates to the polyisocyanate composition obtainable by the inventive process.

Monomeric diisocyanates are practically not used as crosslinkers in polyurethane systems due to their volatility and toxicological properties. Usually higher molecular weight derivatives are used, modified for example with isocyanurate, iminooxadiazinedione, uretdione, urethane or allophanate groups. An overview of these polyisocyanates and their production method is exemplified in Laas et al., J. Prakt. Chem. 336, 1994, 185-200.

The oligomerization or polymerization of monomeric diisocyanates, especially to form higher molecular weight oligomer mixtures, has long been known. The reaction of a relatively small number of isocyanates with one another is referred to as oligomerization. The reaction of a relatively large number of isocyanates is referred to as polymerization. All products resulting from such processes are referred to collectively in this document as oligomeric/polymeric polyisocyanates.

Monomeric isocyanates formed from renewable raw materials and their higher molecular weight derivatives are playing an ever greater part not least, quite simply, for reasons of sustainability and also for reasons of cost.

This explains, inter alia, the development of diisocyanates based on renewable and inexpensive sugars, such as 1:4-3:6 dianhydrohexitols for example (J. Thiem et al., Macromol. Chem. Phys. 202, 3410-3419, 2001). WO2011/000587 describes the synthesis of higher molecular weight derivates of these diisocyanates, i.e. of (3R,3aR,6S,6aR)-, (3S,3aR,6S,6aR)- and (3R,3aR,6R,6aR)-3,6-diisocyanato-2,3,3a,5,6,6a-hexahydrofuro[3,2-b]furan, and WO2011/000586 and WO2011/000585 describe the use of these diisocyanates in polyurethane systems. Polyisocyanates based on mixtures of these sugar based diisocyanates with further aliphatic diisocyanates are not disclosed in these documents.

As apparent from examples 1 and 2 of the present document oligomeric polyisocyanates (i.e. polyisocyanates comprising isocyanurate structures) based on the above mentioned diisocyanates cannot be purified via technically relevant methods like thin-film-evaporation due to their high melt-viscosities. Furthermore, the solubility of these polyisocyanates is limited in standard solvents used in typical polyurethane (especially coatings) applications and results in precipitation of the material. For industrial application however, it is necessary to free the reaction mixture from unreacted, acutely toxic monomeric diisocyanates and to get soluble polyisocyanates.

Thus, it was an object of the present invention to provide a process, which solves these problems and leads to polyisocyanate composition comprising at least one isocyanurate structure, which is well soluble and has a low content of monomeric diisocyanates.

This object has been achieved by a process for preparing a polyisocyanate composition comprising at least one isocyanurate structure, comprising

reacting an isocyanate composition, comprising

A) (3R,3aR,6S,6aR)-3,6-diisocyanato-2,3,3a,5,6,6a-hexahydrofuro[3,2-b]furan and/or (3S,3aR,6S,6aR)-3,6-diisocyanato-2,3,3a,5,6,6a-hexahydrofuro[3,2-b]furan and/or (3R,3aR,6R,6aR)-3,6-diisocyanato-2,3,3a,5,6,6a-hexahydrofuro[3,2-b]furan
and

B) at least one diisocyanate of the general formula OCN-R-NCO, wherein R is a divalent linear or branched aliphatic residue containing at least 4 carbon atoms,

optionally in the presence of at least one catalyst C), to form a raw polyisocyanate composition,

and subjecting the raw polyisocyanate composition to a distillation, preferably to a thin film distillation, a short path distillation and/or a falling film distillation, in order to at least partially remove unreacted moieties of components A) and B) and to obtain the polyisocyanate composition comprising at least one isocyanurate structure.

The references to "comprising", "containing", etc. preferably denote "substantially consisting of" and very particularly preferably denote "consisting of". In the present invention, any numerical range recited herein is intended to include all sub-ranges subsumed therein. For example, a range of "1 to 10" is intended to include all sub-ranges between (and including) the recited minimum value of 1 and the recited maximum value of 10, that is, having a minimum value equal to or greater than 1 and a maximum value of equal to or less than 10.

Isocyanurate structures (also referred to as isocyanurate groups) are understood as structural units of the following general formula:

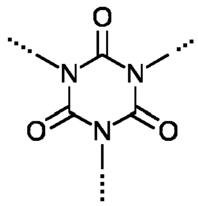

Isocyanurate structure

Isocyanate composition comprising components A and B and its reaction:

According to this invention, (3R,3aR,6S,6aR)-3,6-diisocyanato-2,3,3a,5,6,6a-hexahydrofuro[3,2-b]furan is referred to "ISODI", (3S,3aR,6S,6aR)-3,6-diisocyanato-2,3,3a,5,6,6a-hexahydrofuro[3,2-b]furan is referred to "IDDI" and (3R,3aR,6R,6aR)-3,6-diisocyanato-2,3,3a,5,6,6a-hexahydrofuro[3,2-b]furan is referred to "IMANDI".

The precursors for the synthesis of ISODI and IDDI can be obtained from different sources but are preferably obtained from a biobased source.

Preferred diisocyantes of component B) are diisocyanate of the general formula OCN-R-NCO, wherein R is a divalent linear or branched aliphatic residue containing 4 to 10 carbon atoms. Suitable diisocyanates are, for example: pentamethylene diisocyanate (PDI), hexamethylene diisocyanate (HDI), 2-methylpentane 1,5-diisocyanate, 2,2,4-trimethylhexane 1,6-diisocyanate, 2,4,4-trimethylhexane 1,6-diisocyanate and/or 4-isocyanatomethyloctane 1,8-diisocyanate. Preferred is the use of PDI and/or HDI.

Optionally the isocyanate composition may comprise further monomeric diisocyanates different from components A)

and B). Preference is given to 3(4)-isocyanatomethyl-1-methylcyclohexyl isocyanate (IMCI), isophorone diisocyanate (IPDI), 1,3- and 1,4-bis(isocyanatomethyl)benzene (XDI) and/or 1,3- and 1,4-bis(isocyanatomethyl)cyclohexane (H6XDI).

In a preferred embodiment of the invention, component (A) is used in amounts of ≥ 5 to ≤ 95 % by weight, preferably ≥ 10 to ≤ 90 % by weight, more preferably ≥ 20 to ≤ 80 % by weight, based on the total amount of components A) and B).

The amount of the optional further diisocyanates different from the essential diisocyanates of components A) and B) is guided by the specific application and, if they are used at all, may vary within wide limits. They are used in amounts of preferably 0 to 5 % by weight, more preferably 0 to 2 % by weight, even more preferably 0 to 1 % by weight, based on the total amount of monomeric compounds that have NCO groups. It is however most preferred that their amount is 0, i.e. that only components A) and B) are used.

It is irrelevant by which processes the above mentioned diisocyanates are generated, i.e. with or without use of phosgene. Preferred in the industrial production of the isocyanates is the phosgenation in the liquid-phase or the gas-phase and even more preferred by gas-phase phosgenation as described for example in EP 0 764 633 A2. ISODI, IDDI and IMANDI are preferably prepared from the respective diamines.

As catalysts C) to be optionally used for the NCO-NCO reactions to form the isocyanurate structures the typical compounds known to be catalytically active to isocyanates are suitable. These catalysts include, in addition to compounds of ionic structure for example with "onium" cations (ammonium, phosphonium, etc.) and nucleophilic anions such as hydroxide, alkanoate, carboxylate, heterocycles having at least one negatively charged nitrogen atom in the ring, especially azolate, imidazolate, triazolate, tetrazolate, fluoride, hydrogendifluoride, higher polyfluorides or mixtures of these (adducts of more than one equivalent of HF onto compounds containing fluoride ions), also neutral bases such as tertiary amines or phosphanes (phosphines).

The progress of the reaction in the process of the invention can be monitored by determining the NCO content by titrimetric means as per DIN EN ISO 11909:2007-05. On attainment of the desired NCO content ("degree of polymerization") the reaction is stopped by suitable means depending on the modification reaction and/or the use of a catalyst or not. Preferably catalysts are deactivated by addition of suitable catalyst poisons.

According to a further preferred embodiment, the reaction is taken to a point where the reaction mixture has a

degree of oligomerization of 5 % to 40%, preferably of 10% to 30%.

"Degree of oligomerization" is defined as the percentage of the isocyanate groups originally present in the starting mixture that is consumed during the reaction according to the invention. The degree of oligomerization in percent can be calculated according to the following formula:

$$\text{Degree of oligomerization} = (\text{NCO start} - \text{NCO end}) / \text{NCO start} \times 100.$$

The reaction can be discontinued, for example, when the target degree of oligomerization has been reached. This degree of oligomerization is reached generally after a reaction time of 30 minutes to 8 hours, preferably of 1 to 6 hours.

The reaction may be terminated for example by cooling the reaction mixture to room temperature. In general, however, the reaction is ended by addition of a catalyst poison and optional subsequent brief heating of the reaction mixture to a temperature above 80°C, for example. It is also possible to use a combination of both options to terminate the reaction, i.e. by cooling the mixture to room temperature and adding a catalyst poison, wherein the catalyst poison can be added before, during or after the reaction mixture is cooled down.

Examples of suitable catalyst poisons are inorganic acids such as hydrochloric acid, phosphorous acid or phosphoric acid, acyl chlorides such as acetyl chloride, benzoyl chloride or isophthaloyl dichloride, sulfonic acids and sulfonic esters, such as methanesulfonic acid, p-toluenesulfonic acid, trifluoromethanesulfonic acid, perfluorobutane sulfonic acid, dodecylbenzenesulfonic acid, methyl and ethyl p-toluenesulfonates, monoalkyl and dialkyl phosphates such as monotridecyl phosphate, dibutyl phosphate, and dioctyl phosphate, and also silylated acids, such as trimethylsilyl methanesulfonate, trimethylsilyl trifluoromethanesulfonate, tris(trimethylsilyl) phosphate, and diethyl trimethylsilyl phosphate.

The amount of catalyst poison needed to end the reaction is dependent here on the amount of catalyst used; in general, an equivalent amount of the catalyst poison is used, based on the catalyst used at the start. Taking account, though, losses of catalyst possibly occurring during the reaction, 20 to 80 equivalent% of the catalyst poison, based on the amount of catalyst originally used, may also be sufficient to end the reaction.

The reaction of the isocyanate composition may be conducted with or without solvent. Suitable solvents are, for example, the customary paint solvents that are known per se such as ethyl acetate, butyl acetate, ethylene glycol monomethyl or monoethyl ether acetate, 1-methoxyprop-2-yl acetate, 3-methoxy-n-butyl acetate, acetone, 2-butanone, 4-methyl-2-pentanone, cyclohexanone, toluene, xylene, chlorobenzene, white spirit, more highly substituted aromatics, of the kind available commercially, for example, under the names Solventnaphtha, Solvesso®, Isopar®, Nappar®, Varsol® (ExxonMobil Chemical Central Europe, Cologne, Germany) and Shellsol® (Shell Deutschland Oil GmbH, Hamburg, Germany), and also solvents such as propylene glycol diacetate, diethylene glycol dimethyl ether, dipropylene glycol dimethyl ether, diethylene glycol ethyl and butyl ether acetate, N-methylpyrrolidone and N-methylcaprolactam, or any desired mixtures of such solvents. These solvents are so-called inert solvents, i.e. they do not react with the reactive groups of the starting components.

Besides these inert solvents, solvents, which react with the reactive groups of the starting components and are incorporated into the product, i.e. the resulting polyisocyanates, can also be used. Examples of such solvents are: methanol, ethanol, n-propanol, isopropanol, n-butanol, n-hexanol, 2-ethyl-1-hexanol, ethylene glycol, propylene glycol, the isomeric butanediols, 2-ethyl-1,3-hexanediol or glycerin, ether alcohols, such as 1-methoxy-2-propanol, 3-ethyl-3-hydroxymethyloxetane, tetrahydrofurfuryl alcohol, ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, diethylene glycol and dipropylene glycol, ester alcohols, such as ethylene glycol monoacetate, propylene glycol monolaurate, glycerol mono- and diacetate, glycerol monobutyrate or 2,2,4-trimethyl-1,3-pentanediol monoisobutyrate, unsaturated alcohols such as allyl alcohol, 1,1-dimethylallyl alcohol or olein alcohol, and araliphatic alcohols such as benzyl alcohol, and higher molecular weight polyethylene glycols, propylene glycols, mixed polyethylene/polypropylene glycols and their monoalkyl ethers.

The reaction mixture obtained after the reaction of the isocyanate composition is referred to herein as "raw polyisocyanate composition".

Distillation step

The obtained raw polyisocyanate composition is subjected to distillation in order to at least partially remove unreacted moieties of components A) and B). The expression "at least partially" refers to the fact that the content of unreacted monomeric diisocyanates is/cannot be 100% removed by distillation, so that small moieties remain in the end product, i.e. the polyisocyanate compostition (see the following statements on the residual monomeric diisocyanate content under the heading "Polyisocyanate composition").

In addition to unreacted moieties of components A) and B) other volatile constitutents, if present, such as unreacted moieties of further monomeric diisocyanates different from components A) and B) or solvents, can be at least partially removed by the distillation step.

The distillation is preferably carried out as thin film distillation, short path distillation and/or falling film distillation, preferably in a vacuum, in one or several evaporator stages, with the one or the final evaporator stage of the several stages preferably having a pressure of less than 1.0 mbar, preferably less than 0.25 mbar, particularly preferably less than 0.2 mbar. On a production scale, the distillation is preferably carried out in several stages, with pressures of less than 30 mbar in the first stages, preferably less than 20 mbar, particularly preferably less than 10 mbar and a pressure of less than 1 mbar, preferably less than 0.25 mbar, particularly preferably less than 0.2 mbar in the last evaporator stage.

In an embodiment of the invention a catalyst poison is added to the raw polyisocyanate composition before or during the distillation is performed.

The distillation is preferably carried out at a temperature of 100 to 200°C, more preferably of 120 to 200°C.

It is possible to use different or multiple distillation methods such as thin film distillation, falling film distillation or short path distillation.

The design of the evaporator stages, evaporation units and distillation apparatus for the possible distillation methods can be chosen arbitrarily. It can be advantageous to heat these with direct steam and/or a pressurized water circuit. In addition, the evaporation units preferably contain several condensers and vacuum pumps. In a preferred embodiment, the distillation setup comprises or consists of three evaporator stages and particularly preferably comprises or consists of a falling film evaporator as the first evaporation stage, a thin film evaporator or falling film evaporator as the second evaporator stage and a short-path evaporator as the third evaporator stage.

Polyisocyanate composition

The inventive process leads to polyisocyanate compositions with a low residual monomeric diisocyanate content.

In a preferred embodiment, the inventive polyisocyanate composition is characterized in that it has a residual monomeric diisocyanate content of diisocyanates of components A) and B) of less than 1 % by weight, preferably less than 0.5 % by weight and more preferably less than 0.1 % by weight, based on the total weight of the polyisocyanate composition.

In case further monomeric diisocyanates different from components A) and B) are used in the synthesis of the raw polyisocyanate composition the residual monomeric diisocyanate content of all these diisocyanates, i.e. of diisocyanates of components A) and B) and of the additional monomeric diisocyanates, is preferably less than 1 % by weight, preferably less than 0.5 % by weight and more preferably less than 0.1 % by weight, based on the total weight of the polyisocyanate composition.

The residual monomeric diisocyanate content is determined by gas chromatography in accordance with DIN EN ISO 10283:2007-11 with internal standard.

In a preferred embodiment, the inventive polyisocyanate composition is characterized in that it has an NCO content determined in accordance with DIN EN ISO 11909:2007-05 of from 5.8 to 25.9% by weight, preferably from 7.8 to 24.9% by weight, particularly preferably from 9.7 to 23.9% by weight, based on the total weight of the polyisocyanate composition.

In addition to the isocyanurate structures the inventive polyisocyanate composition may also contain allophanate, iminooxadiazinedione, urethane, urea, uretdione, oxadiazinetrione, carbodiimide, thiourethane, thioallophanate and/or biuret structures.

In a preferred embodiment the inventive polyisocyanate composition contains at least one allophanate structure, iminooxadiazinedione structure, urethane structure, urea structure, uretdione structure, oxadiazinetrione structure, carbodiimide structure, thiourethane structure, thioallophanate structure and/or biuret structure in addition to the at least one isocyanurate structure.

In a preferred embodiment the polyisocyanate composition comprises, based on the total solid content of the polyisocyanate composition A), ≥ 99 % by weight, preferably ≥ 99.5 % by weight and more preferably ≥ 99.9 % by weight of polyisocyanates containing at least one isocyanurate structure and at least one allophanate structure, iminooxadiazinedione structure, urethane structure, urea structure, uretdione structure, oxadiazinetrione structure, carbodiimide structure, thiourethane structure, thioallophanate structure and/or biuret.

In a preferred embodiment of the above preferred embodiments the fraction of isocyanurate structures in the inventive polyisocyanate composition is ≥ 70 to ≤ 99 mol% , preferably ≥ 75 to ≤ 99 mol% and more preferably ≥ 80 to ≤ 99 mol%, in each case based on the total amount of isocyanurate, allophanate, iminooxadiazinedione, urethane, urea, uretdione, oxadiazinetrione, carbodiimide, thiourethane, thioallophanate and biuret structures of the inventive polyisocyanate composition.

The total fraction of urethane and/or allophanate structures is at most 30 mol% (≥ 0 to ≤ 30 mol%), preferably at

most 20 mol% (≥ 0 to ≤ 20 mol%), in each case based on the total amount of isocyanurate, allophanate, iminooxadiazinedione, urethane, urea, uretdione, oxadiazinetrione, carbodiimide, thiourethane, thioallophanate and biuret structures in the polyisocyanate composition.

The total fraction of iminooxadiazinedione, urea, uretdione, oxadiazinetrione, carbodiimide, thiourethane, thioallophanate and/or biuret structures is at most 10 mol% (≥ 0 to ≤ 10 mol%), preferably at most 5 mol% (≥ 0 to ≤ 5 mol%), in each case based on the total amount of isocyanurate, allophanate, iminooxadiazinedione, urethane, urea, uretdione, oxadiazinetrione, carbodiimide, thiourethane, thioallophanate and biuret structures in the polyisocyanate composition.

The fractions (mol%) of isocyanurate, iminooxadiazinedione, allophanate, urethane, urea, uretdione, oxadiazinetrione, carbodiimide, thiourethane, thioallophanate and biuret structures are determined by $^{13}C$ NMR spectroscopy. The measurements are conducted on the Bruker DPX 400 or DRX 700 instruments on approx. 50% ($^{13}C$ NMR) samples in dry $C_6D_6$, at 100 or 176 MHz ($^{13}C$ NMR). The $C_6D_5H$ present in the NMR solvent is used as reference signal (7.15 ppm, $^{1}H$-NMR), or the solvent signal itself (average signal of the 1:1:1 triplet at 128.0 ppm in the $^{13}C$ NMR).

The weight ratio of (3R,3aR,6S,6aR)-3,6-diyl-2,3,3a,5,6,6a-hexahydrofuro[3,2-b]furan-, (3S,3aR,6S,6aR)-3,6-diyl-2,3,3a,5,6,6a-hexahydrofuro[3,2-b]furan- and/or (3R,3aR,6R,6aR)-3,6-diisocyanato-2,3,3a,5,6,6a-hexahydrofuro[3,2-b]furan-structures in the polyisocyanate composition to structures -R- in the polyisocyanate composition, wherein R corresponds to the organic residue R in the general formula OCN-R-NCO of component B), is ≥ 2.5:1 to ≤ 8:1, preferably ≥ 3:1 to ≤ 7.6:1, most preferably ≥ 3.2:1 to ≤ 7.4:1, wherein the fraction of these structures in the polyisocyanate composition is determined using NMR spectroscopic analysis using the same equipment and conditions as described above.

The inventive polyisocyanate compositions are storage stable at 24°C for at least 14 days, preferably at least 21 days, more preferably at least 28 days. Storage stable means that they show no sign of solid formation.

In an embodiment, the NCO-groups of the inventive polyisocyanate composition are completely or partially blocked with conventional blocking agents such as phenols, such as phenol, and p-chlorophenol, alcohols such as benzyl alcohol, oximes such as acetone oxime, methyl ethyl ketoxime, cyclopentanone oxime, cyclohexanone oxime, methyl isobutyl ketoxime, methyl tert-butyl ketoxime. diisopropyl ketoxime, diisobutyl ketoxime or acetophenone oxime, N-hydroxy compounds such as N-hydroxysuccinimide or hydroxypyridines, lactams such as ε-caprolactam, CH-acidic compounds such as ethyl acetoacetate or malonic esters, amines such as diisopropylamine, heterocyclic compounds having at least one heteroatom such as mercaptans, piperidines. piperazines, pyrazoles, imidazoles, triazoles and tetrazoles, α-hydroxybenzoic esters such as glycolic esters or hydroxamic esters such as benzyl methacrylohydroxamate.

Unless stated otherwise, all number-average molecular weights given in this document are determined by GPC according to DIN EN ISO 13885-1:2021-11 using polystyrene as standard and tetrahydrofuran as eluent.

The comparative examples and examples which follow are intended to further illustrate the invention but without limiting it.

**Examples:**

All percentages, unless noted otherwise, are to be understood to mean percent by weight.

All reactions were conducted under a nitrogen atmosphere in glass apparatuses dried beforehand under reduced pressure at 150-200 °C.

Mol% data or the simple existence of the isocyanurate, iminooxadiazinedione, allophanate, urethane, urea, uretdione, oxadiazinetrione, carbodiimide, thiourethane, thioallophanate and/or biuret structure present in the polyisocyanates were determined by $^{13}C$ NMR spectroscopy and always relate, unless noted otherwise, to the sum total of the NCO conversion products. The measurements were conducted on the Bruker DPX 400 or DRX 700 instruments on approx. 50% ($^{13}C$ NMR) samples in dry $C_6D_6$, unless noted otherwise, at 100 or 176 MHz ($^{13}C$ NMR). The $C_6D_5H$ present in the NMR solvent was used as reference signal (7.15 ppm, $^{1}H$-NMR), or the solvent signal itself (average signal of the 1:1:1 triplet at 128.0 ppm in the $^{13}C$ NMR.

Dynamic viscosities were determined at 23 °C using the MCR 501 rheometer (from Anton Paar) in accordance with DIN EN ISO 3219:1994-10. Measurement at different shear rates ensured that Newtonian flow behavior can be assumed. Details regarding the shear rate can therefore be omitted.

The NCO content was determined by titration in accordance with DIN EN ISO 10283:2007-11.

The residual monomer content was determined by gas chromatography in accordance with DIN EN ISO 10283:2007-11 with internal standard.

**Starting materials used**

| | |
|---|---|
| HDI | Covestro Deutschland AG |
| PDI | Covestro Deutschland AG |
| MPA | 1-methoxypropyl-2-acetate, anhydrous, was obtained from Azelis, St. Augustin |
| Butyl acetate | Obtained from Azelis, St. Augustin |

## Polyisocyanates

**Polyisocyanate 1: IDDI polyisocyanate** (not inventive):

In a 500 mL three-neck flask with septum, internal thermometer and reflux condenser, IDDI (139.11 g) was charged and the mixture was tempered to 60°C. The NCO value of this mixture was 42.8%. Subsequently, catalyst (5-azaspiro[4.5]decan-5-ium fluoride hydrofluoride, 24% in 2-ethylhexanol, 25 ppm on active substance) was added dropwise. The mixture was quenched with dodecylbenzenesulfonic acid (40% in iPrOH) upon reaching an NCO value of 40.7%. An attempt was then made to purify the resin by thin film distillation (190°C / 0.19 mbar). However, it was found that IDDI polyisocyanate resins are not suitable for purification by thin film distillation, as their melt viscosity is too high. By perforating with isooctane, a large portion of the IDDI could be removed from the resin. The resulting resin was not flowable and was dissolved 70% in boiling butyl acetate. After cooling to room temperature, the resin precipitated again as a colorless solid after 24h.

Viscosity (70% in butyl acetate): initially 3500 mPas, after 24h: solid precipitate

NCO content: 14.9%

**Polyisocyanate 2: ISODI polyisocyanate** (not inventive):

In a 500 mL three-neck flask with septum, internal thermometer and reflux condenser, ISODI (139.11 g) was charged and the mixture was tempered to 60°C. The NCO value of this mixture was 42.8%. Subsequently, catalyst (5-azaspiro[4.5]decan-5-ium fluoride hydrofluoride, 24% in 2-ethylhexanol, 25 ppm on active substance) was added dropwise. The mixture was quenched with dodecylbenzenesulfonic acid (40% in iPrOH) upon reaching an NCO value of 40.7%. An attempt was then made to purify the resin by thin film distillation (190°C / 0.19 mbar). However, it was observed that ISODI polyisocyanate resins are not suitable for purification by thin film distillation, as their melt viscosity is too high. ISODI polyisocyanates could not be isolated.

**Polyisocyanate 3: Mixed Trimer IDDI-HDI** (inventive)

Experiment 1: In a 500 mL three-neck flask with septum, internal thermometer and reflux condenser, IDDI (150.50 g) and HDI (150.50 g) were charged and the mixture was tempered to 60°C. The NCO value of this mixture was 46%. Subsequently, catalyst (5-azaspiro[4.5]decan-5-ium fluoride hydrofluoride, 24% in 2-ethylhexanol, 10 ppm based on active component) was added dropwise. The mixture was quenched with dodecylbenzenesulfonic acid (40% in iPrOH) upon reaching an NCO value of 43.7% and subsequently purified by thin film distillation (190°C / 0.19 mbar). A flowable resin with the following characteristics was obtained: Resin structure ($^{13}$C-NMR) from IDDI/HDI mixed polyisocyanates, predominantly polyisocyanurates, weight ratio of IDDI structures to HDI structures is approximately 7.3.

Experiment 2: In a 500 mL three-neck flask with septum, internal thermometer and reflux condenser, IDDI (108.70 g) and HDI (191.70 g) were charged and the mixture was tempered to 60°C. The NCO value of this mixture was 46.6%. Subsequently, catalyst (5-azaspiro[4.5]decan-5-ium fluoride hydrofluoride, in 24% 2-ethylhexanol, 17 ppm based on active component) was added dropwise, causing the reaction mixture to heat up to 88°C. The mixture was quenched with dodecylbenzenesulfonic acid (40% in iPrOH) upon reaching an NCO value of 40.8% and subsequently purified by thin film distillation (190°C / 0.19 mbar). A flowable resin with the following characteristics was obtained: Resin structure ($^{13}$C-NMR) from IDDI/HDI mixed polyisocyanates, predominantly polyisocyanurates, weight ratio of IDDI structures to HDI structures is approximately 3.3. The resins from experiments 1 and 2 were combined and diluted to 60% solids content.

Polyisocyanate 3 with the following characteristics was obtained: Resin structure ($^{13}$C-NMR) from IDDI/HDI mixed polyisocyanates, predominantly polyisocyanurates, weight ratio of IDDI structures to HDI structures is approximately 4.3. After storage of the resin for 4 weeks at 24°C, no sign of solid formation could be observed.

| | |
|---|---|
| Isocyanurate structures: | 98 mol% |
| Allophanate/Urethan structures: | 2 mol% |

(continued)

| | |
|---|---|
| Monomeric Diisocyanates: | 0.1% |
| NCO content (resin): | 20.5% |
| Solid Content: | 60% in BA |
| Viscosity (23°C, 60% BA): | 252 mPas |

**Polyisocyanate 4: Mixed Trimer ISODI-IDDI-HDI** (inventive)

Experiment 1: In a 500 mL three-neck flask with septum, internal thermometer and reflux condenser, ISODI (147.60 g), IDDI (147.60 g) and HDI (147.60 g) were charged and the mixture was tempered to 60°C. The NCO value of this mixture was 44%. Subsequently, catalyst (5-azaspiro[4.5]decan-5-ium fluoride hydrofluoride in 2-ethylhexanol, 35 ppm based on active component) was added dropwise. The mixture was quenched with dodecylbenzenesulfonic acid (40% in iPrOH) upon reaching an NCO value of 40.5% and subsequently purified by thin film distillation (190°C / 0.12 mbar). A flowable resin with the following characteristics was obtained: Resin structure ($^{13}$C-NMR) from ISODI/IDDI/HDI mixed polyisocyanates, predominantly polyisocyanurates, weight ratio of IDDI and ISODI structures (sum of both) to HDI structures is approximately 6.1. The distillate consisted of approx. 29% IDDI, 31% ISODI and 40% HDI.

Experiment 2: The distillate from experiment 1 was trimerized and processed in an analogous manner. A flowable resin with the following characteristics was obtained: Resin structure ($^{13}$C-NMR) from ISODI/IDDI/HDI mixed polyisocyanates, predominantly polyisocyanurates, weight ratio of IDDI and ISODI structures (sum of both) to HDI structures is approximately 6.1. Viscosity (70% in butyl acetate): 7000 mPas NCO content: 14.2% The distillate consisted of approx. 24% IDDI, 30% ISODI and 46% HDI.

Experiment 3: The distillate from experiment 2 was trimerized and processed in an analogous manner. A flowable resin with the following characteristics was obtained: Resin structure ($^{13}$C-NMR) from ISODI/IDDI/HDI mixed polyisocyanates, predominantly polyisocyanurates, weight ratio of IDDI and ISODI structures (sum of both) to HDI structures is approximately 4.6. The distillate consisted of approx. 20% IDDI, 28% ISODI and 52% HDI.

The resins from experiments 1 to 3 were combined and diluted to 60% solids content.

Polyisocyanate 4 with the following characteristics was obtained: Resin structure ($^{13}$C-NMR) from ISODI/IDDI/HDI mixed polyisocyanates, predominantly polyisocyanurates, weight ratio of incorporated IDDI and ISODI structures (sum of both) to HDI structures is approximately 4.9. After storage of the resin for 4 weeks at 24°C, no sign of solid formation could be observed.

| | |
|---|---|
| Isocyanurate structures : | 98 mol% |
| Allophanate/Urethan structures : | 2 mol% |
| Monomeric Diisocyanates: | <0.1% |
| NCO content (solid resin): | 20.0% |
| Solid content: | 60% in BA |
| Viscositiy (23°C, 60% BA): | 450 mPas |

**Polyisocyanate 5: Mixed Trimer ISODI-HDI** (inventive)

In a 2000 mL three-neck flask with septum, internal thermometer and reflux condenser, ISODI (350.00 g, 1.00 eq) and HDI (1000.00 g) were charged and the mixture was tempered to 60°C. The NCO value of this mixture was 48.0%. Subsequently, an alcohol mixture containing 11,8 g of 2-Ethylhexanol (0.05 eq) and 11,8 g of 2-Ethylhexan-1,3-diole (0.05 eq) was added and stirred till a NCO value of 47.05% was reached. After that, catalyst (5-azaspiro[4.5]decan-5-ium fluoride hydrofluoride, 24% in 2-ethylhexanol, 35 ppm on active content) was added dropwise. The mixture was quenched with dodecylbenzenesulfonic acid (40% in iPrOH) upon reaching an NCO value of 39.4% and subsequently purified by thin film distillation (140°C / 0.001 mbar). A flowable resin with the following characteristics was obtained: Resin structure ($^{13}$C-NMR) from ISODI/HDI mixed polyisocyanates, predominantly polyisocyanurates, weight ratio of incorporated ISODI to HDI structures is approximately 2.8. After storage of the resin for 4 weeks at 24°C, no sign of solid formation could be observed.

| | |
|---|---|
| Isocyanurate structures : | 85 mol% |
| Allophanate/Urethan structures : | 15 mol% |
| Monomeric Diisocyanates: | <0.1% |
| NCO content (solid resin): | 19.1% |

(continued)

| | |
|---|---|
| Solid content: | 70% in BA |
| Viscositiy (23°C, 70% in BA): | 724 mPas |

**Polyisocyanate 6: Mixed Trimer ISODI-PDI** (inventive)

In a 2000 mL three-neck flask with septum, internal thermometer and reflux condenser, ISODI (354.00 g, 1.0 eq) and PDI (1000.00 g) were charged and the mixture was tempered to 60°C. The NCO value of this mixture was 51.4%. Subsequently, a alcohol mixture containing 14,3 g of 2-Ethylhexanol (0.05 eq) and 14,3 g of 2-Ethylhexan-1,3-diole (0.05 eq) was added and stirred till a NCO value of 47.05% was reached. After that catalyst (5-azaspiro[4.5]decan-5-ium fluoride hydrofluoride, 24% in 2-ethylhexanol, 35 ppm on active content) was added dropwise. The mixture was quenched with dodecylbenzenesulfonic acid (40% in iPrOH) upon reaching an NCO value of 42.4% and subsequently purified by thin film distillation (140°C / 0.001 mbar). A flowable resin with the following characteristics was obtained: Resin structure ($^{13}C$-NMR) from ISODI/PDI mixed polyisocyanates, predominantly polyisocyanurates, weight ratio of incorporated ISODI to PDI structures is approximately 4.8. After storage of the resin for 4 weeks at 24°C, no sign of solid formation could be observed.

| | |
|---|---|
| Isocyanurate structures : | 83 mol% |
| Allophanate/Urethan structures : | 17 mol% |
| Monomeric Diisocyanates: | <0.1% |
| NCO content (solid resin): | 20.0% |
| Solid content: | 70% in BA |
| Viscositiy (23°C, 70% BA): | 544 mPas |

**Discussions of the obtained results:**

As apparent from the descriptions of examples 1 and 2, isohexide diisocyanates can be oligomerized by catalytic means to obtain polyisocyanates. However, due to their high melt-viscosities, the polyisocyanates obtained can not be purified via technically relevant methods like thin-film-evaporation. Furthermore, the solubility of polyisocyanates which are solely based on isohexide based diisocyanates is limited and results in precipitation of the material (cf. example 1). For industrial application however, it is necessary to free the reaction mixture from excess monomeric diisocyanates and to get soluble polyisocyanates. As can be seen from inventive examples 3-6, mixed oligomerization of isohexide diisocyanates with long-chain aliphatic diisocyanates like HDI and PDI result in reaction mixtures which can be easily purified via thin-film-evaporation. These polyisocyanates contain high amounts of renewable isohexide polyisocyanates moieties while being highly soluble in common solvents, thus being applicable as crosslinkers for polyurethane chemistry.

## Claims

1. Process for preparing a polyisocyanate composition comprising at least one isocyanurate structure, comprising

   reacting an isocyanate composition, comprising

   A) (3R,3aR,6S,6aR)-3,6-diisocyanato-2,3,3a,5,6,6a-hexahydrofuro[3,2-b]furan and/or (3S,3aR,6S,6aR)-3,6-diisocyanato-2,3,3a,5,6,6a-hexahydrofuro[3,2-b]furan and/or (3R,3aR,6R,6aR)-3,6-diisocyanato-2,3,3a,5,6,6a-hexahydrofuro[3,2-b]furan and
   B) at least one diisocyanate of the general formula OCN-R-NCO, wherein R is a divalent linear or branched aliphatic residue containing at least 4 carbon atoms,

   optionally in the presence of at least one catalyst C), to form a raw polyisocyanate composition,
   and subjecting the raw polyisocyanate composition to a distillation, preferably to a thin film distillation, a short path distillation and/or a falling film distillation, in order to at least partially remove unreacted moieties of components A) and B) and to obtain the polyisocyanate composition comprising at least one isocyanurate structure.

2. Process according to claim 1, wherein the at least one diisocyanate of the general formula OCN-R-NCO is selected

from the group consisting of pentamethylene diisocyanate (PDI), hexamethylene diisocyanate (HDI), 2-methylpentane 1,5-diisocyanate, 2,2,4-trimethylhexane 1,6-diisocyanate, 2,4,4-trimethylhexane 1,6-diisocyanate and 4-isocyanatomethyloctane 1,8-diisocyanate.

**3.** Process according to claim 1 or 2, wherein the reaction is thermally induced and/or conducted in the presence of at least one catalyst which accelerates the reaction of components A) and B).

**4.** Process according to any of claims 1 to 3, wherein component (A) is used in amounts of ≥ 5 to ≤ 95 % by weight, preferably ≥ 10 to ≤ 90 % by weight, more preferably ≥ 20 to ≤ 80 % by weight, in each case based on the total amount of components A) and B).

**5.** Process according to any of claims 1 to 4, wherein the distillation is carried out in one or several evaporator stages, preferably in a vacuum and preferably at a temperature of ≥100 to ≤200°C.

**6.** Polyisocyanate composition, obtainable or obtained by a process according to any of claims 1 to 5.

**7.** Polyisocyanate composition according to claim 6, **characterized by** a residual monomeric diisocyanate content of diisocyanates of components A) and B) of less than 1 % by weight, preferably less than 0.5 % by weight and more preferably less than 0.1 % by weight, based on the total weight of the polyisocyanate composition and determined by gas chromatography in accordance with DIN EN ISO 10283:2007-11 with internal standard.

**8.** Polyisocyanate composition according to claim 6 or 7, **characterized by** a NCO content of from 5.8 to 25.9% by weight, preferably from 7.8 to 24.9% by weight, particularly preferably from 9.7 to 23.9% by weight, based on the total weight of the polyisocyanate composition and determined in accordance with DIN EN ISO 11909:2007-05.

**9.** Polyisocyanate composition according to any of claims 6 to 8, containing at least one allophanate structure, iminooxadiazinedione structure, urethane structure, urea structure, uretdione structure, oxadiazinetrione structure, carbodiimide structure, thiourethane structure, thioallophanate structure and/or biuret structure in addition to the at least one isocyanurate structure.

**10.** Polyisocyanate composition according to claim 9, wherein the fraction of isocyanurate structures in the inventive polyisocyanate composition is ≥ 70 to ≤ 99 mol% , preferably ≥ 75 to ≤ 99 mol% and more preferably ≥ 80 to ≤ 99 mol%, in each case based on the total amount of isocyanurate, allophanate, iminooxadiazinedione, urethane, urea, uretdione, oxadiazinetrione, carbodiimide, thiourethane, thioallophanate and biuret structures of the inventive polyisocyanate composition, wherein the fractions of these structures are determined using NMR spectroscopic analysis as described in the specification.

**11.** Polyisocyanate composition according to claim 9 or 10, wherein the total fraction of urethane and/or allophanate structures is at most 30 mol% (≥ 0 to ≤ 30 mol%), preferably at most 20 mol% (≥ 0 to ≤ 20 mol%), in each case based on the total amount of isocyanurate, allophanate, iminooxadiazinedione, urethane, urea, uretdione, oxadiazinetrione, carbodiimide, thiourethane, thioallophanate and biuret structures in the polyisocyanate composition, wherein the fractions of these structures are determined using NMR spectroscopic analysis as described in the specification.

**12.** Polyisocyanate composition according to claim 10 or 11, wherein the total fraction of iminooxadiazinedione, urea, uretdione, oxadiazinetrione, carbodiimide, thiourethane, thioallophanate and/or biuret structures is ≥ 0 to ≤ 10 mol%, preferably ≥ 0 to ≤ 5 mol%, in each case based on the total amount of isocyanurate, allophanate, iminooxadiazinedione, urethane, urea, uretdione, oxadiazinetrione, carbodiimide, thiourethane, thioallophanate and biuret structures in the polyisocyanate composition, wherein the fractions of these structures are determined using NMR spectroscopic analysis as described in the specification.

**13.** Polyisocyanate composition according to any of claims 6 to 12, wherein the weight ratio of (3R,3aR,6S,6aR)-3,6-diyl-2,3,3a,5,6,6a-hexahydrofuro[3,2-b]furan-, (3S,3aR,6S,6aR)-3,6-diyl-2,3,3a,5,6,6a-hexahydrofuro[3,2-b]furan- and/or (3R,3aR,6R,6aR)-3,6-diisocyanato-2,3,3a,5,6,6a-hexahydrofuro[3,2-b]furan-structures in the polyisocyanate composition to structures -R- in the polyisocyanate composition, wherein R corresponds to the organic residue R in the general formula OCN-R-NCO of component B), is ≥ 2.5:1 to ≤ 8:1, preferably ≥ 3:1 to ≤ 7.6:1, most preferably ≥ 3.2:1 to ≤ 7.4:1, wherein the fraction of these structures in the polyisocyanate composition is determined using NMR spectroscopic analysis as described in the specification.

14. Polyisocyanate composition according to any of claims 6 to 13, wherein NCO-groups of the inventive polyisocyanate composition are completely or partially blocked with a blocking agent.

Europäisches Patentamt
European Patent Office
Office européen des brevets

# EUROPEAN SEARCH REPORT

Application Number
EP 24 21 8963

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 4 296 260 A1 (COVESTRO DEUTSCHLAND AG [DE]) 27 December 2023 (2023-12-27)<br>* paragraph [0001]; claims 1-15 *<br>* paragraphs [0077], [0079]; example *<br>----- | 1-14 | INV.<br>C08G18/20<br>C08G18/32<br>C08G18/73<br>C08G18/79<br>C08G18/02<br>C08G18/77 |
| A | US 2012/073472 A1 (SPYROU EMMANOUIL [DE] ET AL) 29 March 2012 (2012-03-29)<br>* paragraph [0001]; claims 1-27 *<br>* paragraph [0070]; example 2 *<br>----- | 1-14 | |

TECHNICAL FIELDS SEARCHED (IPC)

C08G

The present search report has been drawn up for all claims

| Place of search | Date of completion of the search | Examiner |
|---|---|---|
| Munich | 30 April 2025 | Paulus, Florian |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 24 21 8963

This annex lists the patent family members relating to the patent documents cited in the above-mentioned European search report. The members are as contained in the European Patent Office EDP file on The European Patent Office is in no way liable for these particulars which are merely given for the purpose of information.

30-04-2025

| Patent document cited in search report | Publication date | Patent family member(s) | Publication date |
|---|---|---|---|
| EP 4296260 A1 | 27-12-2023 | CN 119278196 A | 07-01-2025 |
| | | EP 4296260 A1 | 27-12-2023 |
| | | EP 4543852 A1 | 30-04-2025 |
| | | KR 20250026185 A | 25-02-2025 |
| | | WO 2023247525 A1 | 28-12-2023 |
| US 2012073472 A1 | 29-03-2012 | CN 102471452 A | 23-05-2012 |
| | | DE 102009027395 A1 | 05-01-2011 |
| | | DE 112010002792 A5 | 20-09-2012 |
| | | US 2012073472 A1 | 29-03-2012 |
| | | WO 2011000587 A1 | 06-01-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2011000587 A
- WO 2011000586 A
- WO 2011000585 A
- EP 0764633 A2


### Non-patent literature cited in the description


- **LAAS et al.** *J. Prakt. Chem*, 1994, vol. 336, 185-200
- **J. THIEM et al.** *Macromol. Chem. Phys*, 2001, vol. 202, 3410-3419